# EUROPÄISCHE PATENTANMELDUNG

(11) **EP 1 134 559 A2**
(43) Veröffentlichungstag der Anmeldung: **19.09.2001**
(21) Anmeldenummer: 01810169.1
(22) Anmeldetag: 19.02.2001
(51) Int. Cl.: G01F 1/66

(54) **Durchflussmesser**

(30) Priorität: 15.03.2000 DE 10012395
(71) Anmelder: ABB RESEARCH LTD., 8050 Zürich (CH)
(72) Erfinder: Byatt, Anthony, 5313 Klingnau (CH); Kleiner, Thomas, 5442 Fislisbach (CH); Matter, Daniel, 5200 Brugg (CH); Prêtre, Philippe, 5405 Baden-Dättwil (CH)
(74) Vertreter: ABB Patent Attorneys

(57) **Zusammenfassung**

Ein photoakustischer Effekt wird verwendet, um eine Durchflussmenge eines strömenden Mediums (M), insbesondere von Erdgas, zu messen. Mittels eines Lichtemitters (1) wird im Medium (M) eine Schallwelle (S) erzeugt, welche über das Medium (M) übertragen und von einem Schalldetektor (2) detektiert wird. Der Lichtemitter (1) ist dem Medium (M) weniger ausgesetzt als eine Membran, wie sie im Ultraschallverfahren eingesetzt wird.

## Beschreibung

### Technisches Gebiet

Die Erfindung bezieht sich auf ein Verfahren zur Messung einer Durchflussmenge eines strömenden Mediums gemäss Oberbegriff des Patentanspruches 1 und einen Durchflussmesser gemäss Oberbegriff des Patentanspruches 8.

### Stand der Technik

Es ist bekannt, Durchflussmengen von einem fliessenden Medium, insbesondere von Gas, mittels Ultraschall zu bestimmen. Das Medium wird über ein Mikrophon mit einer Schallwelle bestrahlt, wobei die über das Medium übertragene Schallwelle mittels eines zweiten Mikrophons, welches strömungsabwärts oder strömungsaufwärts angeordnet ist, detektiert wird. Als Mikrophone werden vorzugsweise piezoelektrische oder kapazitive Schwingungsabgeber beziehungsweise -aufnehmer eingesetzt. Grundsätzlich existieren zwei Messverfahren. In einem ersten Verfahren wird die Zeitspanne zwischen Emission und Detektion der Schallwelle bestimmt und daraus die Strömungsgeschwindigkeit berechnet. In einem zweiten Verfahren wird der Dopplereffekt, welcher durch das strömende Medium verursacht wird, ausgenützt und dessen Frequenzverschiebung bestimmt. Eine derartige Ultraschallmessung ist beispielsweise aus US 4'080'837 bekannt.

Die Messung mittels Ultraschall hat den Nachteil, dass die Schall emittierenden Mikrophone in direkten Kontakt mit dem Medium sein müssen. Dadurch müssen Rohrwandungen mit entsprechenden Öffnungen versehen und die Mikrophone darin angeordnet werden. Da die zu messenden Medien zudem oft agressiv sind, muss das Mikrophon entsprechend mit einer resistenten Schutzschicht versehen werden. Ferner ist das Mikrophon beziehungsweise dessen Schutzschicht Ablagerungen ausgesetzt, welche die Schallemission beeinträchtigt.

Im Stand der Technik ist ferner ein photoakustisches Verfahren bekannt, um Verunreinigungen in einem Medium zu detektieren. In diesem photoakustischen Verfahren wird ausgenützt, dass die Verunreinigungen und das Medium ihre optische Absorption bei unterschiedlichen Wellenlängen aufweisen. Das verunreinigte Medium wird deshalb mit fokussiertem Licht einer definierten Wellenlänge bestrahlt, welche von der Verunreinigung, nicht jedoch vom Medium absorbiert wird. Sind in einem bestrahlten Volumen Verunreinigungen vorhanden, so führt die Absorption zu einer lokalen Erwärmung, worauf das Volumen sich ausdehnt und eine Druck- und Schallwelle aussendet. Diese Schallwelle lässt sich mittels Mikrophonen detektieren. Derartige photoakustische Verfahren sind beispielsweise aus DE-A-31'39'917 und EP-A-0'908'717 bekannt.

### Darstellung der Erfindung

Es ist Aufgabe der Erfindung, ein Verfahren zur Messung einer Durchflussmenge sowie einen Durchflussmesser der eingangs genannten Art zu schaffen, welche die Nachteile der Ultraschallmessung beheben.

Diese Aufgabe löst ein Verfahren mit den Merkmalen des Patentanspruches 1 sowie ein Durchflussmesser mit den Merkmalen des Patentanspruches 8.

Im erfindungsgemässen Verfahren wird ein photoakustischer Effekt ausgenützt, um eine Schallwelle im Medium zu erzeugen. Dabei wird das Medium mit Licht bestrahlt, wobei eine Wellenlänge verwendet wird, welche vom Medium absorbiert wird. Das Medium erzeugt die Schallwelle somit selber.

Das Licht lässt sich durch eine kleine Rohröffnung von einer Lichtquelle in das Medium leiten, so dass lediglich eine minimale Fläche rein gehalten werden muss. Zudem lässt sich der Durchflussmesser kleiner gestalten als die bekannten Durchflussmesser auf Ultraschallbasis.

In einer ersten Variante des Verfahrens wird die Laufzeit photoakustischen Schallwelle gemessen, um eine Strömungsgeschwindigkeit zu bestimmen. In einer bevorzugten Untervariante wird eine Laufzeit der Schallwelle in Strömungsrichtung mit einer Laufzeit entgegen der Strömungsrichtung verglichen, um eine von einem Zeitpunkt der Generierung der Schallwelle unabhängige Messung zu erhalten.

In einer zweiten Variante wird eine Doppler-Frequenzänderung der photoakustischen Schallwelle detektiert, um eine Strömungsgeschwindigkeit zu bestimmen. In einer bevorzugten Untervariante wird die Doppler-Frequenzänderung in Strömungsrichtung mit einer Doppler-Frequenzänderung entgegen der Strömungsrichtung verglichen, um eine von einem Zeitpunkt der Generierung der Schallwelle unabhängige Messung zu erhalten.

In einer dritten Variante des Verfahrens wird eine von der Strömungsgeschwindigkeit unabhängige Laufzeitmessung der photoakustischen Schallwelle durchgeführt, um die Dichte des Mediums zu bestimmen.

In einer vierten Variante des Verfahrens wird ein Strömungsprofil erstellt, indem das Medium von Lichtstrahlen bestrahlt wird, welche räumlich voneinander getrennte Brennpunkte aufweisen, wobei mittels der Brennpunkte ein Raster gebildet wird.

Weitere vorteilhafte Varianten des Verfahrens und vorteilhafte Ausführungsformen gehen aus den abhängigen Patentansprüchen hervor.

### Kurze Beschreibung der Zeichnungen

Im folgenden wird das erfindungsgemässe Verfahren anhand von bevorzugten Ausführungsbeispielen, welche in den beiliegenden Zeichnungen dargestellt sind, näher erläutert. Es zeigen in schematischer Darstellung:
- Figur 1: einen erfindungsgemässen Durchflussmesser gemäss einer ersten Ausführungsform;
- Figur 2: einen Durchflussmesser mit zwei Schalldetektoren gemäss einer zweiten Ausführungsform;
- Figur 3: einen Durchflussmesser zur Bestimmung einer Dichte eines Mediums in einer dritten Ausführungsform
- Figur 4: einen Durchflussmesser in einer vierten Ausführungsform und
- Figur 5: einen Durchflussmesser zur Bestimmung eines Strömungsprofils gemäss einer fünften Ausführungsform.

### Wege zur Ausführung der Erfindung

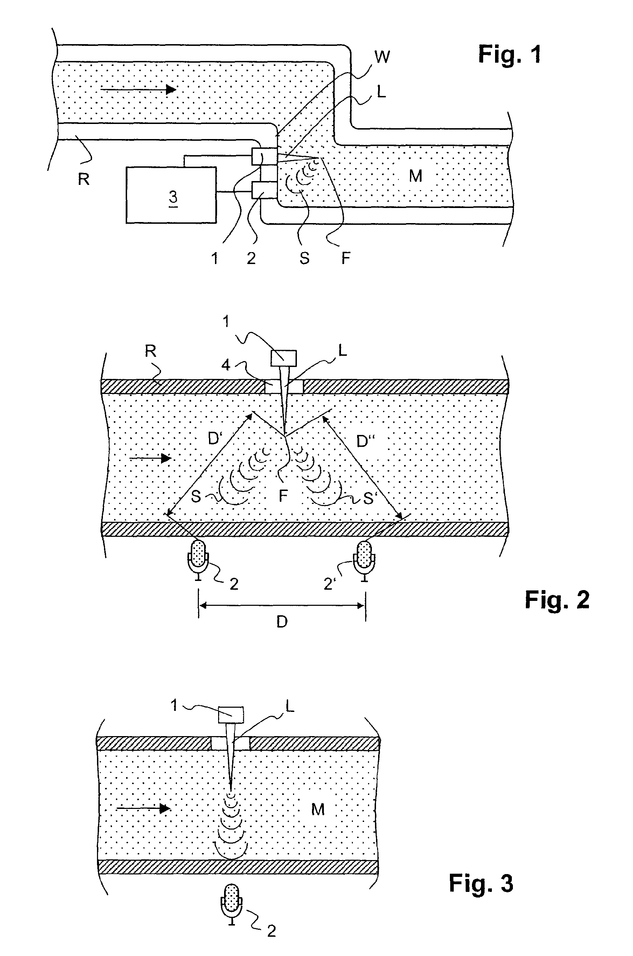

In Figur 1 ist eine erste Ausführungsform des erfindungsgemässen Durchflussmessers dargestellt, wie er an einem von einem Medium M durchflossenen Rohr R angebracht ist. Er besteht im wesentlichen aus mindestens einem Lichtemitter 1, mindestens einem Schalldetektor 2 und einer mit dem Lichtemitter 1 und dem Schalldetektor 2 verbundenen Steuer- und Auswerteelektronik 3.

Der Lichtemitter 1 ist vorzugsweise eine Laserdiode mit einer dem zu messenden Medium angepassten Wellenlänge. Weist das Medium, wie beispielsweise Erdgas, C-H-Bindungen auf, so wird vorzugsweise eine Wellenlänge gewählt, welche diese Bindungen anregt, das heisst eine Wellenlänge im Bereich zwischen 1.5 und 3.5 µm. Die Wahl der Wellenlänge hängt auch von der Dichte des Mediums ab. Da die Intensität einer mittels photoakustischen Effekt erzeugten Schallwelle proportional zum Absorptionskoeffizienten des Mediums ist, kann bei einer geringen Dichte eine Wellenlänge nahe beim Absorptionsmaximum gewählt werden, bei hoher Dichte eine Wellenlänge, welcher weiter vom Absorptionsmaximum entfernt liegt. Vorzugsweise wird der Laser gepulst betrieben, beispielsweise mit kurzen Pulsen mit einer Dauer von mindestens annähernd 200ns. Eine zu erwartende Temperaturänderung des Mediums liegt dann typischerweise zwischen 0.1 und 0.2°C.

Der Lichtemitter 1 ist in dieser Ausführungsform in einer Wandung des Rohrs R eingelassen. In einer anderen Ausführungsform ist sie jedoch ausserhalb des Rohres R angeordnet und durchstrahlt das Rohr R durch ein geeignetes Fenster 4, wie dies in Figur 2 dargestellt ist. Ebenso ist es möglich, dass eine Lichtquelle verwendet wird, welche in einiger Entfernung zum Rohr angeordnet ist und das Licht mittels eines faseroptischen Wellenleiters an eine geeignete Stelle des Rohres R geleitet wird. Dies ist dann von Vorteil, wenn die Leistung der Lichtquelle ausreicht, um den Lichtstrahl zu teilen und die Teilstrahlen an mehrere Lichtemitter 1 zu senden.

Als Schalldetektor 2 lässt sich vorzugsweise ein piezoelektrisches oder kapazitives Mikrophon einsetzen. Dabei lässt sich der Schalldetektor 2 in die Rohrwandung einlassen, wie dies in Figur 1 dargestellt ist oder er ist, wie in Figur 2 sichtbar, ausserhalb des Rohres R angeordnet.

In der Ausführungsform gemäss Figur 1 ist lediglich ein einziger Lichtemitter 1 und ein einziger Schalldetektor 2 vorhanden. Beide Elemente sind in einer Biegung des Rohres R angeordnet, wobei sie sich an derselben Wandung W befinden. Diese Wandung W erstreckt sich mindestens annähernd senkrecht zu einer Hauptströmungsrichtung des Mediums, welche in der Figur mit einem Pfeil gekennzeichnet ist.

Der Lichtemitter 1 ist mit einer Fokussieroptik versehen, so dass ein ausgesendeter Lichtstrahl L innerhalb des Rohres in einem Brennpunkt oder Fokus F fokussiert wird. In diesem Brennpunkt F wird eine Schallwelle S im Medium M erzeugt. Die erzeugte Schallwelle S breitet sich im Medium M aus und gelangt zum Schalldetektor 2. Gemessen wird eine Zeitdifferenz zwischen emittiertem Lichtpuls und Detektion der Schallwelle. Diese Zeitdifferenz ist bei bekannter Lage des Brennpunktes F ein Mass für die Strömungsgeschwindigkeit. In einer anderen Variante des Verfahrens wird mit der Vorrichtung gemäss Figur 1 eine Doppler-Frequenzänderung gemessen, um die Strömungsgeschwindigkeit zu bestimmen.

In der Figur 2 sind ein Lichtemitter 1 und zwei Schalldetektoren 2,2' vorhanden. Mit dem ersten Schalldetektor 2 wird die Laufzeit oder die Doppler-Frequenzänderung der Schallwelle S in Strömungsrichtung des Mediums M gemessen, mit dem zweiten Schalldetektor 2' die Laufzeit oder die Doppler-Frequenzänderung entgegen der Strömungsrichtung. Die Differenz der zwei Laufzeiten oder der zwei Doppler-Frequenzänderungen führt bei bekanntem Abstand D zwischen den zwei Schalldetektoren 2,2' und bekanntem Abständen D',D" vom Brennpunkt F zu den Schalldetektoren 2,2' zur Strömungsgeschwindigkeit. Die Messung ist dabei unabhängig vom Zeitpunkt der Schallerzeugung.

In der Anordnung gemäss Figur 3 lässt sich eine Dichte des Mediums M bestimmen. Der Schalldetektor 2 ist so in Bezug auf den Lichtemitter 1 angeordnet, dass die Laufzeitmessung unabhängig von der Strömungsgeschwindigkeit des Mediums M ist und somit im wesentlichen nur von der Dichte des Mediums abhängt. In diesem Beispiel sind Schalldetektor 2 und Lichtemitter 1 deshalb in einer Ebene senkrecht zur Strömungsrichtung angeordnet. Ist die Strömungsgeschwindigkeit bekannt, lässt sich durch die Dichtemessung auch ein Massenfluss bestimmen.

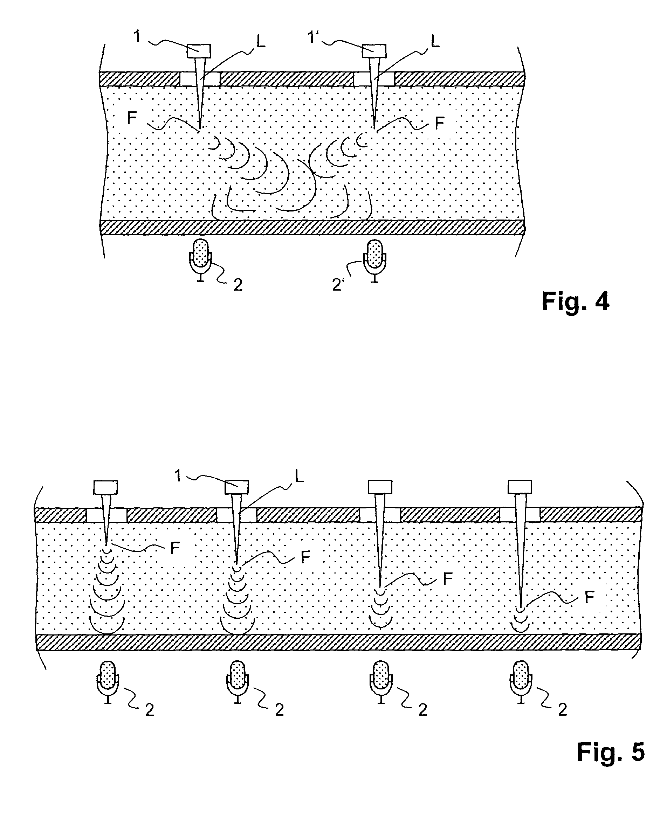

In der Ausführungsform gemäss der Figur 4 lassen sich Laufzeitdifferenz und Dichte gleichzeitig bestimmen. Hierfür sind zwei Lichtemitter 1,1' vorhanden.

Vorzugsweise weisen diese unterschiedliche Leistungen oder unterschiedliche Wellenlängen auf, um zwei verschieden starke Schallwellen zu erzeugen, so dass die Schalldetektoren die Signale den einzelnen Lichtemittern 1,1' zuordnen können.

In Figur 5 ist eine weitere Ausführungsform dargestellt, mittels welcher sich ein Dichteprofil erstellen lässt. Hierfür sind mehrere Brennpunkte F im Medium M vorhanden, welche einen unterschiedlichen Abstand zu den Wandungen des Rohres R aufweisen. Die Brennpunkte F bilden somit ein Raster. Dieses Raster lässt sich, wie hier dargestellt, mittels mehreren Lichtemittern 1 erreichen, welche entlang des Rohres R angeordnet sind. Es lässt sich jedoch auch mittels eines einzigen Lichtemitters 1 erreichen, welcher eine elektronisch veränderbare Fokussieroptik aufweist und somit eine Querschnittsebene durch das Medium M scannen kann. Mittels des mindestens einen Schalldetektors 2 lässt sich wiederum die Laufzeit und somit die Dichte des Mediums messen.

In allen oben beschriebenen Ausführungsformen lassen sich Leistung und/oder Wellenlänge des Lichts variieren. Dadurch werden zusätzlich zur Durchflussmenge weitere Angaben über das Medium erhalten, beispielsweise über dessen Zusammensetzung oder Brennwert.
Durch Analyse eines detektieren Schallsignals lassen sich zudem eine Aussagen über allfällige Turbulenzen oder laminare Strömungen innerhalb des Rohres R machen.

Der erfindungsgemässe Durchflussmesser ist insbesondere als Gaszähler für Erdgas im Industrie- und Haushaltbereich geeignet.

### Bezugszeichenliste

- R: Rohr
- W: Wandung
- M: Medium
- L: Lichtpulse
- F: Brennpunkt
- s: Schallwelle
- D: Abstand zwischen zwei Schalldetektoren
- D',D": Abstand vom Brennpunkt zum Schalldetektor

- 1: erster Lichtemitter
- 1': zweiter Lichtemitter
- 2: erster Schalldetektor
- 2': zweiter Schalldetektor
- 3: Auswerteelektronik
- 4: Fenster

## Patentansprüche

1. Verfahren zur Messung einer Durchflussmenge eines strömenden Mediums (M) mittels Detektion einer durch das Medium (M) übertragenen Schallwelle (S), **dadurch gekennzeichnet, dass** die Schallwelle (S) im Medium (M) durch Bestrahlung des Mediums (M) mit Licht (L) erzeugt wird, wobei das Licht (L) eine Wellenlänge aufweist, welche vom Medium (M) absorbiert wird.

2. Verfahren nach Anspruch 1, **dadurch gekennzeichnet, dass** eine Laufzeit der Schallwelle (S) gemessen wird.

3. Verfahren nach Anspruch 1, **dadurch gekennzeichnet, dass** eine Doppler-Frequenzänderung gemessen wird.

4. Verfahren nach Anspruch 1, **dadurch gekennzeichnet, dass** eine erste Schallwelle (S) in Strömungsrichtung und eine zweite Schallwelle (S') entgegen der Strömungsrichtung detektiert wird.

5. Verfahren nach Anspruch 1, **dadurch gekennzeichnet, dass** eine von der Strömungsgeschwindigkeit unabhängige Laufzeitmessung der Schallwelle (S) durchgeführt wird.

6. Verfahren nach Anspruch 1, **dadurch gekennzeichnet, dass** mehrere räumlich voneinander getrennte Brennpunkte (F) verwendet werden, welche einen unterschiedlichen Abstand von einem vom Medium (M) durchströmten Rohr (R) aufweisen.

7. Verfahren nach Anspruch 1, **dadurch gekennzeichnet, dass** das Medium (M) Erdgas ist und mit einem Laser mit einer Wellenlänge zwischen 1.5 und 3.5 µm und mit einer Pulsdauer von mindestens annähernd 200 ns bestrahlt wird.

8. Durchflussmesser mit einem Emitter zur Erzeugung einer Schallwelle (S) in einem strömenden Medium (M) und einem beabstandet zum Emitter angeordneten Schalldetektor (2), **dadurch gekennzeichnet, dass** der Emitter ein Lichtemitter (1) ist.

9. Durchflussmesser gemäss Anspruch 8, **dadurch gekennzeichnet, dass** der Lichtemitter (1) und der Schalldetektor (2) in einer Ebene mindestens annähernd senkrecht zur Strömungsrichtung des Mediums (M) angeordnet sind.

10. Durchflussmesser nach Anspruch 8, **dadurch gekennzeichnet, dass** ein Lichtemitter (1) eine Fokussieroptik aufweist zur Fokussierung eines Lichtstrahls (L) in einem Brennpunkt (F) innerhalb des Mediums (M).

11. Verwendung des Durchflussmesser nach einem der Anspruche 8-10 als Gaszähler.
